# EUROPÄISCHE PATENTSCHRIFT

(11) **EP 3 206 820 B1**
(45) Veröffentlichungstag und Bekanntmachung des Hinweises auf die Patenterteilung: **18.08.2021**
(21) Anmeldenummer: 15785052.0
(22) Anmeldetag: 07.10.2015
(51) Int. Cl.: B23B 31/02, B23B 31/107

(54) **SPANNSYSTEM**
CLAMPING SYSTEM
SYSTEME DE SERRAGE

(30) Priorität: 16.10.2014 DE 202014008275 U
(43) Veröffentlichungstag der Anmeldung: 23.08.2017
(73) Patentinhaber: Karl Schüssler GmbH & Co. KG, 72411 Bodelshausen (DE)
(72) Erfinder: SCHÜSSLER, Klaus, 72379 Hechingen-Sickingen (DE)
(74) Vertreter: v. Bezold & Partner Patentanwälte - PartG mbB
(86) Internationale Anmeldenummer: PCT/EP2015/001971
(87) Internationale Veröffentlichungsnummer: WO 2016/058677

(56) Entgegenhaltungen:
- EP-A1- 2 669 032
- DE-A1- 3 738 732
- JP-A- H09 216 107
- JP-U- H04 125 505
- JP-U- S62 198 035
- US-A- 3 645 161
- US-A- 4 133 545
- US-A- 4 437 801
- US-A- 5 601 295
- US-A1- 2008 226 422

## Beschreibung

Die Erfindung betrifft ein Spannsystem zum Spannen eines Gegenstands, insbesondere zum Einspannen eines Zerspanungswerkzeugs in einer Werkzeugmaschine.

Ein derartiges Spannsystem ist beispielsweise aus DE 10 2010 034 889 A1 bekannt. Auf einer Seite weist dieses bekannte Spannsystem ein Standardfutter auf, das in an sich bekannter Weise mit einer Spindelaufnahme einer Werkzeugmaschine verbunden werden kann. Auf der gegenüberliegenden Seite weist dieses bekannte Spannsystem einen Aufnahmestutzen mit einer Aufnahmebohrung auf, wobei das einzuspannende Zerspanungswerkzeug zum Spannen in die Aufnahmebohrung eingeführt wird. In der Wandung des Aufnahmestutzens befindet sich hierbei eine radial verlaufende Gewindebohrung, in die eine Spannschraube eingeschraubt werden kann, um das Zerspanungswerkzeug in der Aufnahmebohrung des Aufnahmestutzens zu arretieren. Hierzu weist das Zerspanungswerkzeug in seiner Mantelfläche eine Anlagefläche für die Spannschraube auf. Beim Einschrauben in die Gewindebohrung in der Wandung des Aufnahmestutzens stößt die Spannschraube also mit ihrem freien Ende gegen die Anlagefläche in der Mantelfläche des Zerspanungswerkzeugs, wodurch das Zerspanungswerkzeug in dem Spannsystem arretiert wird.

Dieses bekannte Spannsystem sichert das Zerspanungswerkzeug zwar zuverlässig gegen ein Herausziehen aus dem Spannsystem. Allerdings ermöglicht dieses bekannte Spannsystem keine befriedigende Verdrehsicherung gegenüber einer Drehung des Zerspanungswerkzeugs um seine Längsachse.

Zum technischen Hintergrund der Erfindung ist hinzuweisen auf JP H04 125505 U, JP S62 198 035 U, US 5 601 295 A, US 4 133 545 A, JP H09 216107 A, DE 37 38 732 A1, US 2008/226422 A1 und US 3 645 161 A.

Schließlich offenbart EP 2 669 032 A1 ein Spannsystem gemäß dem Oberbegriff von Anspruch 1.

Der Erfindung liegt deshalb die Aufgabe zugrunde, ein entsprechend verbessertes Spannsystem zu schaffen.

Diese Aufgabe wird durch ein erfindungsgemäßes Spannsystem gemäß dem Hauptanspruch gelöst.

Das erfindungsgemäße Spannsystem weist zunächst in Übereinstimmung mit dem eingangs beschriebenen bekannten Spannsystem einen Aufnahmestutzen mit einer Aufnahmebohrung auf, um den zu spannenden Gegenstand (z.B. einen Schaft eines Zerspanungswerkzeugs) im gespannten Zustand aufzunehmen.

In der Wandung des Aufnahmestutzens befindet sich hierbei in Übereinstimmung mit dem vorstehend beschriebenen bekannten Spannsystem ebenfalls eine Gewindebohrung, wobei die Längsachse der Gewindebohrung quer zur Längsachse der Aufnahmebohrung verläuft und in die Aufnahmebohrung mündet.

In die Gewindebohrung kann eine Spannschraube (z.B. ein Gewindestift) eingeschraubt werden, um den Gegenstand (z.B. Zerspanungswerkzeug) in Abhängigkeit von der Schraubstellung der Spannschraube wahlweise in der Aufnahmebohrung einzuspannen oder freizugeben, wie es grundsätzlich auch bei dem eingangs beschriebenen bekannten Spannsystem der Fall ist.

Das erfindungsgemäße Spannsystem zeichnet sich nun dadurch aus, dass die Spannschraube nicht direkt auf die Mantelfläche des zu spannenden Gegenstands (z.B. Zerspanungswerkzeug) drückt, sondern mittelbar über ein Zwischenelement, das zwischen der Spannschraube und dem Gegenstand angeordnet ist. Die Spannschraube selbst berührt den zu spannenden Gegenstand (z.B. Zerspanungswerkzeug) also auch im gespannten Zustand nicht. Vielmehr berührt die Spannschraube im gespannten Zustand nur das Zwischenelement, das dann den zu spannenden Gegenstand (z.B. Zerspanungswerkzeug) berührt.

Weiterhin wurde bereits vorstehend kurz erwähnt, dass die Gewindebohrung für die Spannschraube in die Aufnahmebohrung für den zu spannenden Gegenstand (z.B. Zerspanungswerkzeug) mündet. Gemäß der Erfindung ist die Gewindebohrung jedoch zum mittigen Durchmesser der Aufnahmebohrung außermittig versetzt angeordnet. Die Längsachse der Gewindebohrung bildet also in einem Querschnitt rechtwinklig zur Längsachse der Aufnahmebohrung vorzugsweise eine Sekante zum lichten Querschnitt der Aufnahmebohrung. Mit anderen Worten lässt sich sagen, dass die Gewindebohrung mit ihrer Längsachse die Längsachse der Aufnahmebohrung nicht schneidet. Die Längsachsen der Gewindebohrung und der Aufnahmebohrung sind also im mathematischen Sinne windschief.

Hierbei beträgt die Größe des lotrechten Abstandes zwischen der Längsachse der Gewindebohrung einerseits und dem mittigen Durchmesser der Aufnahmebohrung vorzugsweise 2mm. Es ist jedoch im Rahmen der Erfindung auch möglich, dass der lotrechte Abstand zwischen der Längsachse der Gewindebohrung und dem Durchmesser der Aufnahmebohrung, d.h. der außermittige Versatz der Gewindebohrung, im Bereich von 1mm bis 5mm liegt. Dieser außermittige Versatz der Gewindebohrung für die Spannschraube führt in Verbindung mit dem schwenkbaren Zwischenelement dazu, dass der zu spannende Gegenstand (z.B. Zerspanungswerkzeug) auch gegenüber einer Verdrehung um seine Längsachse zuverlässig gesichert wird.

Gemäß der Erfindung weist die Spannschraube an ihrem freien Einschraubende eine Kugelpfanne auf. Entsprechend weist das Zwischenelement auf der Seite der Spannschraube einen entsprechend angepassten Kugelkopf auf, der in der Kugelpfanne der Spannschraube gelagert ist, sodass das Zwischenelement relativ zu der Spannschraube schwenkbar ist. Die Kugelpfanne am Ende der Spannschraube einerseits und der Kugelkopf des Zwischenelements andererseits bilden hierbei also zusammen ein Schwenkgelenk, das vorzugsweise eine allseitige Schwenkbewegung des Zwischenelements relativ zu der Spannschraube ermöglicht.

Hierdurch ist es vorzugsweise möglich, dass das Zwischenelement in einer ersten Schwenkebene relativ zu der Spannschraube schwenkbar ist, wobei die erste Schwenkebene quer zur Aufnahmebohrung verläuft. Darüber hinaus ist das Zwischenelement vorzugsweise auch in einer zweiten Schwenkebene relativ zu der Spannschraube schwenkbar, wobei die zweite Schwenkebene parallel zur Aufnahmebohrung in dem Aufnahmestutzen verläuft. In dem bevorzugten Ausführungsbeispiel der Erfindung ist das Zwischenelement jedoch relativ zu der Spannschraube in allen Richtungen schwenkbar.

Es wurde bereits vorstehend erwähnt, dass bei dem erfindungsgemäßen Spannsystem die Spannschraube mittelbar über das Zwischenelement auf den zu spannenden Gegenstand (z.B. Zerspanungswerkzeug) drückt. Hierzu weist das Zwischenelement auf der Seite des zu spannenden Gegenstands (z.B. Zerspanungswerkzeug) vorzugsweise eine Abplattung auf, d.h. einen ebenen Oberflächenbereich. Entsprechend weist dann auch der zu spannende Gegenstand (z.B. Zerspanungswerkzeug) in seiner äußeren Mantelfläche eine entsprechende Abplattung auf, d.h. einen ebenen Oberflächenbereich. Im eingespannten Zustand des Gegenstands (z.B. Zerspanungswerkzeug) liegt die Abplattung an dem Zwischenelement dann planparallel an der Abplattung an dem zu spannenden Gegenstand (z.B. Zerspanungswerkzeug) an.

Hierbei ist zu erwähnen, dass die Abplattung in der Mantelfläche des zu spannenden Gegenstands vorzugsweise entlang der Längsachse der Aufnahmebohrung geneigt ist und zwar so, dass sich der zu spannende Gegenstand entlang seiner Abplattung zu seinem freien Ende hin erweitert. Durch diese Neigung der Abplattung in der Mantelfläche des zu spannenden Gegenstandes wird erreicht, dass die Spannschraube mit dem Zwischenelement im eingespannten Zustand ein axiales Herausziehen des Gegenstands (z.B. Zerspanungswerkzeug) aus dem Spannsystem sicher verhindert.

Es wurde bereits vorstehend kurz erwähnt, dass die Gewindebohrung in der Wandung des Aufnahmestutzens quer zu der Längsachse der Aufnahmebohrung verläuft. Vorzugsweise verläuft die Gewindebohrung mit ihrer Längsachse in einer Ebene, die rechtwinklig zur Längsachse der Aufnahmebohrung liegt. Dies bedeutet, dass die Gewindebohrung mit ihrer Längsachse bezüglich der Längsachse der Aufnahmebohrung weder in die eine Richtung noch in die andere Richtung geneigt ist.

Es ist jedoch im Rahmen der Erfindung grundsätzlich auch möglich, dass die Gewindebohrung mit ihrer Längsachse schräg zur Längsachse der Aufnahmebohrung verläuft, wie es auch aus DE 10 2010 034 889 A1 bekannt ist, d.h. in einer Ebene, die nicht rechtwinklig zur Längsachse der Aufnahmebohrung verläuft.

Ferner ist zu erwähnen, dass die Aufnahmebohrung vorzugsweise im Wesentlichen zylindrisch ist, wie es auch bei dem eingangs beschriebenen bekannten Spannsystem der Fall ist.

Hinsichtlich der Materialien des zu spannenden Gegenstands, des Zwischenelements und der Spannschraube bestehen verschiedenste Möglichkeiten. Es ist jedoch vorteilhaft, wenn das Zwischenelement und die Spannschraube aus einem weicheren Material bestehen als der zu spannende Gegenstand. Dies ist jedoch meist ohnehin der Fall, wenn es sich bei dem zu spannenden Gegenstand um ein Zerspanungswerkzeug handelt.

Zu der Spannschraube ist zu erwähnen, dass es sich hierbei vorzugsweise um einen Gewindestift handelt, der beispielsweise einen Sechskant-Schraubenkopf oder einen Schlitz-Schraubenkopf haben kann.

Schließlich ist noch zu erwähnen, dass die Erfindung nicht nur Schutz beansprucht für das vorstehend beschriebene erfindungsgemäße Spannsystem als Einzelsystem. Vielmehr beansprucht die Erfindung auch Schutz für eine Werkzeugmaschine (z.B. eine Fräsmaschine) mit einem solchen Spannsystem zum Einspannen eines Zerspanungswerkzeugs (z.B. Fräswerkzeug).

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: durch ein erfindungsgemäßes Spannsystem in einer Längsschnittansicht entlang der Längsachse der Aufnahmebohrung für das zu spannende Zerspanungswerkzeug,
- Figur 2A: eine Querschnittsansicht durch das erfindungsgemäße Spannsystem gemäß Figur 1 entlang der Schnittlinie A-A in Figur 1,
- Figur 2B: eine andere Darstellung gemäß Figur 2A in einer anderen Winkelstellung des eingespannten Zerspanungswerkzeugs,
- Figur 3: eine vergrößerte Detailansicht aus Figur 1, sowie
- Figur 4: eine vergrößerte Detailansicht aus den Figuren 2A und 2B.

Die Zeichnungen zeigen ein bevorzugtes Ausführungsbeispiel eines erfindungsgemäßen Spannsystems zum Einspannen eines Zerspanungswerkzeugs 1 (z.B. Fräswerkzeug) in einer Werkzeugmaschine (z.B. Fräsmaschine).

Auf der Seite der Werkzeugmaschine weist das erfindungsgemäße Spannsystem ein Standardfutter 2 auf, das mechanisch mit einer Spindelaufnahme der Werkzeugmaschine verbunden werden kann. Die mechanische Verbindung des Spannsystems mit der Werkzeugmaschine ist jedoch nicht erfindungswesentlich und kann auch in anderer Weise erfolgen als durch das Standardfutter 2.

Auf der dem Standardfutter 2 gegenüberliegenden Seite weist das erfindungsgemäße Spannsystem einen Aufnahmestutzen 3 mit einer Aufnahmebohrung 4 auf, wobei das Zerspanungswerkzeug 1 zum Spannen axial in die Aufnahmebohrung 4 des Aufnahmestutzens 3 eingeführt wird.

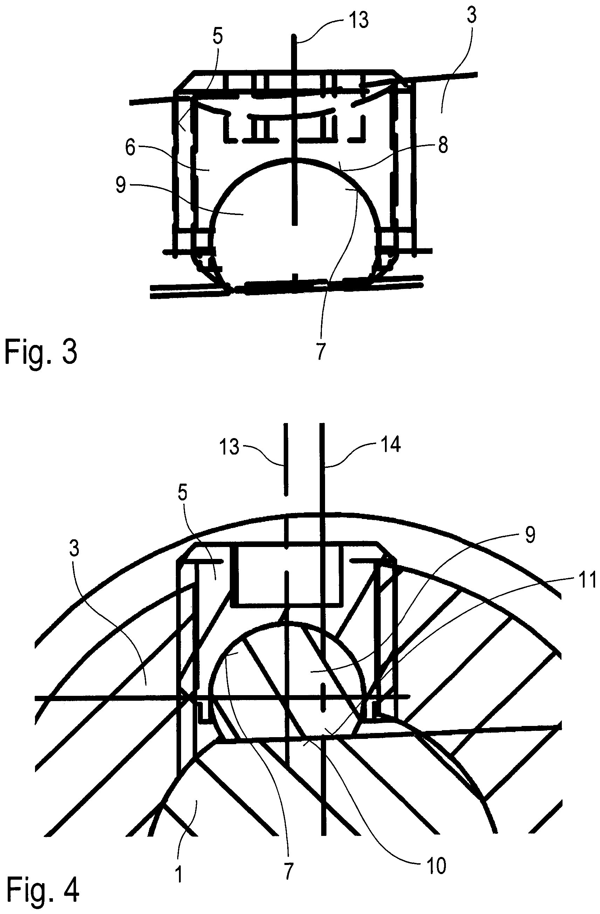

In der Wandung des Aufnahmestutzens 3 befindet sich eine Gewindebohrung 5 (vgl. Fig. 3), in die eine Spannschraube 6 eingeschraubt ist. Die Spannschraube 6 weist in dem dargestellten Ausführungsbeispiel in ihrem Schraubenkopf ein Innensechskant auf, jedoch kann die Spannschraube 6 auch anders ausgebildet sein.

An ihrem freien Einschraubende weist die Spannschraube 6 eine Kugelpfanne 7 (vgl. Fig. 3) auf, wobei die Kugelpfanne 7 in der Spannschraube 6 zusammen mit einem Kugelkopf 8 eines Zwischenelements 9 ein Schwenkgelenk bildet. Das Zwischenelement 9 kann also relativ zu der Spannschraube 6 allseitig geschwenkt werden.

Auf der der Spannschraube 6 abgewandten Seite weist das Zwischenelement 9 eine Abplattung 10 auf, die im eingespannten Zustand planparallel an einer entsprechenden Abplattung 11 in der äußeren Mantelfläche des Zerspanungswerkzeugs 1 anliegt.

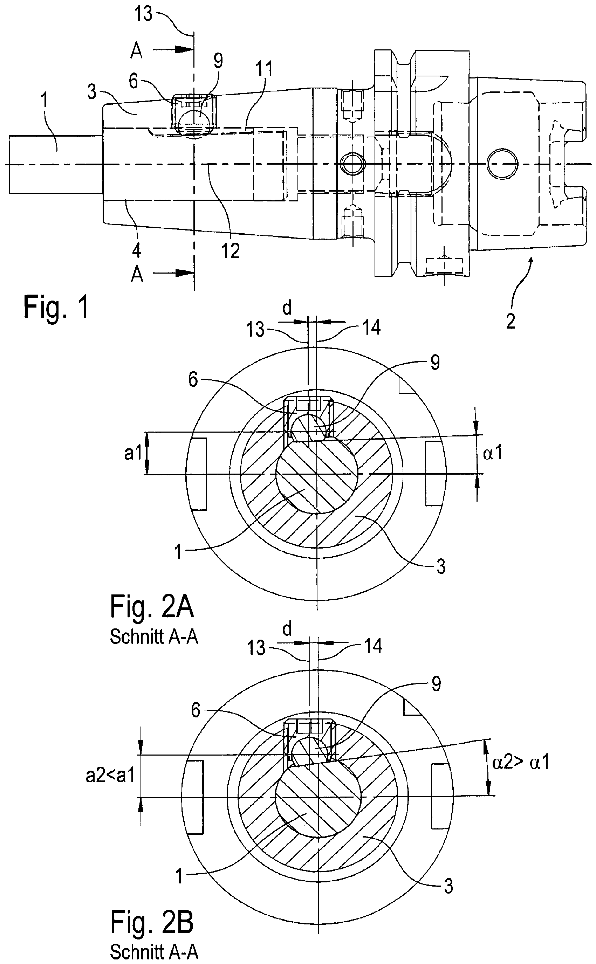

Aus Figur 1 ist ersichtlich, dass die Abplattung 11 in der Mantelfläche des Zerspanungswerkzeugs 1 gegenüber der Längsachse 12 der Aufnahmebohrung 4 geneigt ist und zwar in der Weise, dass sich das Zerspanungswerkzeug 1 im Bereich der Abplattung 11 zu seinem freien Ende hin erweitert. Durch diese Neigung der Abplattung 11 wird erreicht, dass das Zerspanungswerkzeug 1 gegenüber einem axialen Herausziehen sicher fixiert wird.

Aus den Figuren 2A, 2B und 4 ist weiterhin ersichtlich, dass die Gewindebohrung 5 für die Spannschraube 6 eine Längsachse 13 aufweist, die gegenüber einem mittigen Durchmesser 14 der Aufnahmebohrung 4 außermittig versetzt ist. Der lotrechte Abstand zwischen der Längsachse 13 der Gewindebohrung 5 einerseits und dem mittigen Durchmesser 14 der Aufnahmebohrung 4 beträgt in diesem Ausführungsbeispiel d=2mm. Diese außermittige Anordnung der Spannschraube 6 hat zur Folge, dass sich das Zwischenelement 9 beim Einschrauben der Spannschraube 6 relativ zu der Spannschraube 6 schwenkt, wobei die planparallele Anlage der Abplattung 10 des Zwischenelements 9 an der Abplattung 11 in der Mantelfläche des Zerspanungswerkzeugs 1 erhalten bleibt.

In der Winkelstellung gemäß Figur 2A weist das Zerspanungswerkzeug 1 einen Winkel α1=2° auf. Bei dieser Winkelstellung beträgt der Abstand zwischen dem Mittelpunkt des Zwischenelements 9 und dem Mittelpunkt der Aufnahmebohrung 4 a1=10,55mm.

In der Winkelstellung des Zerspanungswerkzeugs 1 gemäß Figur 2B beträgt der entsprechende Winkel dagegen α2=8°, was einem Abstand a2=10,44mm entspricht.

Daraus ist ersichtlich, dass eine Verdrehung des Zerspanungswerkzeugs 1 um seine Längsachse nur möglich ist, wenn die Spannschraube 6 wieder gelockert wird. Das erfindungsgemäße Spannsystem fixiert das Zerspanungswerkzeug 1 also nicht nur gegenüber einem axialen Herausziehen, sondern auch gegenüber einem Drehen um die Längsachse 12.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Zerspanungswerkzeug
- 2: Standardfutter
- 3: Aufnahmestutzen
- 4: Aufnahmebohrung
- 5: Gewindebohrung
- 6: Spannschraube
- 7: Kugelpfanne der Spannschraube
- 8: Kugelkopf des Zwischenelements
- 9: Zwischenelements
- 10: Abplattung an dem Zwischenelement
- 11: Abplattung in der Mantelfläche des Zerspanungswerkzeug
- 12: Längsachse der Aufnahmebohrung
- 13: Längsachse der Gewindebohrung
- 14: Durchmesser der Aufnahmebohrung
- α1, α2: Winkelstellung des Zerspannungswerkzeugs
- d: Versatz zwischen Längsachse der Gewindebohrung und Durchmesser der Aufnahmebohrung
- a1, a2: Abstand zwischen Mittelebene der Aufnahmebohrung und Mittelpunkt der Spannkugel

## Patentansprüche

1. Spannsystem zum Spannen eines Gegenstands (1), insbesondere zum Einspannen eines Zerspanungswerkzeugs in einer Werkzeugmaschine, mit
a) einer Aufnahmebohrung (4) zur Aufnahme des zu spannenden Gegenstands (1),
b) einer Gewindebohrung (5), die in der Wandung der Aufnahmebohrung (4) quer zur Längsachse (12) der Aufnahmebohrung (4) verläuft,
c) einer Spannschraube (6), die in der Gewindebohrung (5) verschraubbar ist, um den Gegenstand (1) in Abhängigkeit von der Schraubstellung der Spannschraube (6) wahlweise in der Aufnahmebohrung (4) einzuspannen oder freizugeben, wobei die Spannschraube (6) an ihrem freien Einschraubende eine Kugelpfanne (7) aufweist,
d) einem zwischen der Spannschraube (6) und dem Gegenstand (1) angeordneten Zwischenelement (9), so dass die Spannschraube (6) den zu spannenden Gegenstand (1) nicht direkt berührt, sondern indirekt über das Zwischenelement (9), wobei das Zwischenelement (9) auf der Seite der Spannschraube (6) einen Kugelkopf (8) aufweist, der in der Kugelpfanne (7) der Spannschraube (6) gelagert ist, so dass das Zwischenelement (9) relativ zu der Spannschraube (6) schwenkbar ist,
**dadurch gekennzeichnet,**
e) **dass** die Gewindebohrung (5) zum Durchmesser (14) der Aufnahmebohrung (4) außermittig versetzt angeordnet ist.

2. Spannsystem nach Anspruch 1, **dadurch gekennzeichnet,**
a) **dass** das Zwischenelement (9) in einer ersten Schwenkebene relativ zu der Spannschraube (6) schwenkbar ist, wobei die erste Schwenkebene quer zur Aufnahmebohrung (4) verläuft ist, und/oder
b) **dass** das Zwischenelement (9) in einer zweiten Schwenkebene relativ zu der Spannschraube (6) schwenkbar ist, wobei die zweite Schwenkebene parallel zur Aufnahmebohrung (4) verläuft, und/oder
c) **dass** das Zwischenelement (9) relativ zu der Spannschraube (6) in allen Richtungen schwenkbar ist.

3. Spannsystem nach Anspruch 2, **dadurch gekennzeichnet, dass** das Zwischenelement (9) auf der Seite des zu spannenden Gegenstands (1) eine Abplattung (10) aufweist, die im eingespannten Zustand des Gegenstands (1) planparallel an einer Abplattung (11) an dem zu spannenden Gegenstand (1) anliegen kann.

4. Spannsystem nach einem der vorhergehenden Ansprüche, **dadurch gekennzeichnet, dass** die Gewindebohrung (5) in einer Ebene verläuft, die rechtwinklig zur Längsachse der Aufnahmebohrung (4) liegt.

5. Spannsystem nach einem der vorhergehenden Ansprüche, **dadurch gekennzeichnet, dass** der lotrechte Abstand (d) zwischen der Längsachse (13) der Gewindebohrung (5) und dem Durchmesser (14) der Aufnahmebohrung (4) größer als 1mm und kleiner als 5mm ist.

6. Spannsystem nach einem der vorhergehenden Ansprüche, **dadurch gekennzeichnet, dass** die Spannschraube (6) den zu spannenden Gegenstand (1) mittels des Zwischenelements (9) gegenüber einem axialen Herausziehen aus der Aufnahmebohrung (4) fixiert, insbesondere formschlüssig.

7. Spannsystem nach einem der vorhergehenden Ansprüche, **dadurch gekennzeichnet, dass** die Spannschraube (6) den zu spannenden Gegenstand (1) mittels des Zwischenelements (9) gegenüber einem Verdrehen um seine Längsachse fixiert, insbesondere formschlüssig.

8. Spannsystem nach einem der vorhergehenden Ansprüche, **dadurch gekennzeichnet,**
a) **dass** die Aufnahmebohrung (4) im Wesentlichen zylindrisch ist, und/oder
b) **dass** das Zwischenelement (9) aus einem weicheren Material besteht als die Spannschraube (6), und/oder
c) **dass** die Spannschraube (6), das Zwischenelement (9) und der zu spannende Gegenstand (1) jeweils aus Stahl bestehen, und/oder
d) **dass** die Spannschraube (6) ein Gewindestift ist.

9. Werkzeugmaschine, insbesondere Fräsmaschine, mit einem Spannsystem nach einem der vorhergehenden Ansprüche zum Einspannen eines Zerspanungswerkzeugs (1), insbesondere eines Fräswerkzeugs.

## Claims

1. Clamping system for clamping an object (1), in particular for clamping a cutting tool in a machine tool, comprising
a) an accommodating bore (4) for accommodating the object (1) to be clamped,
b) a threaded bore (5) which extends in the wall of the accommodating bore (4) transversely to the longitudinal axis (12) of the accommodating bore (4),
c) a clamping screw (6) which is screwable in the threaded bore (5) in order optionally to clamp or release the object (1) dependent upon the screwed position of the clamping screw (6) in the accommodating bore (4), wherein the clamping screw (6) has a cup socket (7) at its free inserting end,
d) an intermediate element (9) arranged between the clamping screw (6) and the object (1), so that the clamping screw (6) does not directly touch the object (1) to be clamped, but rather indirectly via the intermediate element (9), wherein the intermediate element (9) has, on the side of the clamping screw (6), a ball head (8) which is mounted in the cup socket (7) of the clamping screw (6), so that the intermediate element (9) is pivotable relative to the clamping screw (6),
**characterized in**
e) **that** the threaded bore (5) is arranged offset eccentrically to the diameter (14) of the accommodating bore (4).

2. Clamping system according to claim 1,
**characterised in that**
a) the intermediate element (9) is pivotable in a first pivot plane relative to the clamping screw (6) wherein the first pivot plane extends transversely to the accommodating bore (4), and/or
b) **in that** the intermediate element (9) is pivotable in a second pivot plane relative to the clamping screw (6) wherein the second pivot plane extends parallel to the accommodating bore (4), and/or
c) **in that** the intermediate element (9) is pivotable in all directions relative to the clamping screw (6).

3. Clamping system according to claim 2, **characterised in that** the intermediate element (9) has a flattening (10) on the side of the object (1) to be clamped, which in the clamped state of the object (1) can lie in plane-parallel arrangement against a flattening (11) on the object to be clamped (1).

4. Clamping system according to one of the preceding claims, **characterised in that** the threaded bore (5) extends in a plane which lies perpendicularly to the longitudinal axis of the accommodating bore (4).

5. Clamping system according to one of the preceding claims, **characterised in that** the perpendicular spacing (d) between the longitudinal axis (13) of the threaded bore (5) and the diameter (14) of the accommodating bore (4) is greater than 1 mm and is smaller than 5 mm.

6. Clamping system according to one of the preceding claims, **characterised in that** the clamping screw (6) fixes the object (1) to be clamped by means of the intermediate element (9) against axial withdrawal from the accommodating bore (4), in particular form-lockingly.

7. Clamping system according to one of the preceding claims, **characterised in that** the clamping screw (6) fixes the object (1) to be clamped by means of the intermediate element (9) against twisting about its longitudinal axis, in particular form-lockingly.

8. Clamping system according to one of the preceding claims, **characterised in**
a) **that** the accommodating bore (4) is substantially cylindrical, and/or
b) **that** the intermediate element (9) is made of a softer material than the clamping screw (6), and/or
c) **that** the clamping screw (6), the intermediate element (9) and the object (1) to be clamped each consist of steel, and/or
d) **that** that clamping screw (6) is a setscrew.

9. Machine tool, in particular milling machine, having a clamping system according to one of the preceding claims for clamping a cutting tool (1), in particular a milling tool.

## Revendications

1. Système de serrage pour serrer un objet (1), en particulier pour enserrer un outil d'usinage par enlèvement de copeaux dans une machine-outil, avec
a) un alésage de logement (4) pour loger l'objet (1) à serrer,
b) un alésage fileté (5), qui s'étend dans la paroi de l'alésage de logement (4) de manière transversale par rapport à l'axe longitudinal (12) de l'alésage de logement (4),
c) une vis de serrage (6), qui peut être vissée dans l'alésage fileté (5) pour au choix enserrer ou débloquer l'objet (1) dans l'alésage de logement (4) en fonction de la position de vissage de la vis de serrage (6), dans lequel la vis de serrage (6) présente sur son extrémité de vissage libre un coussinet sphérique (7),
d) un élément intermédiaire (9) disposé entre la vis de serrage (6) et l'objet (1) de telle sorte que la vis de serrage (6) n'entre pas en contact direct avec l'objet (1) à serrer, mais plutôt en contact indirect par l'intermédiaire de l'élément intermédiaire (9), dans lequel l'élément intermédiaire (9) présente sur le côté de la vis de serrage (6) une boule (8) qui est montée dans le coussinet sphérique (7) de la vis de serrage (6) de sorte que l'élément intermédiaire (9) peut être pivoté par rapport à la vis de serrage (6),
**caractérisé en ce**
e) **que** l'alésage fileté (5) est disposé avec un décalage excentré par rapport au diamètre (14) de l'alésage de logement (4).

2. Système de serrage selon la revendication 1, **caractérisé en ce**
a) **que** l'élément intermédiaire (9) peut être pivoté dans un premier plan de pivotement par rapport à la vis de serrage (6), dans lequel le premier plan de pivotement s'étend de manière transversale par rapport à l'alésage de logement (4), et/ou
b) **que** l'élément intermédiaire (9) peut être pivoté dans un deuxième plan de pivotement par rapport à la vis de serrage (6), dans lequel le deuxième plan de pivotement s'étend de manière parallèle par rapport à l'alésage de logement (4), et/ou
c) **que** l'élément intermédiaire (9) peut être pivoté dans toutes les directions par rapport à la vis de serrage (6).

3. Système de serrage selon la revendication 2, **caractérisé en ce que** l'élément intermédiaire (9) présente sur le côté de l'objet (1) à serrer un aplatissement (10), qui peut reposer, dans l'état enserré de l'objet (1) de manière plane parallèle sur un aplatissement (11) sur l'objet (1) à serrer.

4. Système de serrage selon l'une quelconque des revendications précédentes, **caractérisé en ce que** l'alésage fileté (5) s'étend dans un plan, qui est à angle droit par rapport à l'axe longitudinal de l'alésage de logement (4).

5. Système de serrage selon l'une quelconque des revendications précédentes, **caractérisé en ce que** la distance perpendiculaire (d) entre l'axe longitudinal (13) de l'alésage fileté (5) et le diamètre (14) de l'alésage de logement (4) est supérieure à 1 mm et inférieure à 5 mm.

6. Système de serrage selon l'une quelconque des revendications précédentes, **caractérisé en ce que** la vis de serrage (6) bloque l'objet (1) à serrer au moyen de l'élément intermédiaire (9) par rapport à une sortie axiale hors de l'alésage de logement (4), en particulier par complémentarité de forme.

7. Système de serrage selon l'une quelconque des revendications précédentes, **caractérisé en ce que** la vis de serrage (6) bloque l'objet (1) à serrer au moyen de l'élément intermédiaire (9) par rapport à une rotation autour de son axe longitudinal, en particulier par complémentarité de forme.

8. Système de serrage selon l'une quelconque des revendications précédentes,
**caractérisé en ce**
a) **que** l'alésage de logement (4) est sensiblement cylindrique, et/ou
b) **que** l'élément intermédiaire (9) est constitué d'un matériau plus mou que la vis de serrage (6), et/ou
c) **que** la vis de serrage (6), l'élément intermédiaire (9) et l'objet (1) à serrer sont constitués respectivement d'acier, et/ou
d) **que** la vis de serrage (6) est une tige filetée.

9. Machine-outil, en particulier machine de fraisage, avec un système de serrage selon l'une quelconque des revendications précédentes, pour enserrer un outil d'usinage par enlèvement de copeaux (1), en particulier un outil de fraisage.
